# EUROPÄISCHE PATENTSCHRIFT

(11) **EP 2 305 163 B1**
(45) Veröffentlichungstag und Bekanntmachung des Hinweises auf die Patenterteilung: **05.10.2022**
(21) Anmeldenummer: 10183458.8
(22) Anmeldetag: 30.09.2010
(51) Int. Cl.: A61C 1/08

(54) **Beleuchtungsvorrichtung für ein dentales Handstück**
Lighting device for a dental handpiece
Dispositif d'éclairage pour une pièce à main dentaire

(30) Priorität: 30.09.2009 DE 102009045175
(43) Veröffentlichungstag der Anmeldung: 06.04.2011
(73) Patentinhaber: Sirona Dental Systems GmbH, 64625 Bensheim (DE)
(72) Erfinder: Rein, Matthias, 64653 Lorsch (DE); Müller, Steffen, 64673 Zwingenberg (DE)
(74) Vertreter: Özer, Alpdeniz

(56) Entgegenhaltungen:
- EP-A2- 1 260 196
- DE-A1-102008 033 556

## Beschreibung

### Technisches Gebiet

Die Erfindung betrifft eine Beleuchtungsvorrichtung für ein medizinisches oder ein zahnmedizinisches Handstück, die eine Leuchtdiode als Leuchtmittel aufweist.

### Stand der Technik

Aus der EP 1112721 A1 ist ein Beleuchtungskörper bekannt, der für ein medizinisches oder dentales Handstück vorgesehen ist, mit einer Lampe, die mit einem Sockel eine vorfertigbare Baueinheit bildet, wobei die Lampe zwei Leiterdrähte aufweist, die sich an zwei einander gegenüberliegenden Außenseiten des Sockels befinden. Die Lampe ist durch eine Leuchtdiode gebildet. Darüber hinaus weist der Sockel eine Verrastungsvorrichtung auf, durch die die Leuchtdiode am Sockel gehalten ist.

Aus der EP 0884025 A1 ist ein dentales Handstück bekannt, das eine Leuchtdiode aufweist, die im Kopfteil des dentalen Handstücks integriert ist und zur Beleuchtung während der zahnärztlichen Behandlung dient.

Aus der DE 4216873 A ist ein Beleuchtungskörper beschrieben, der eine vorgefertigte Baueinheit aufweist, bestehend aus einer Glühlampe und einem Sockel, der eine Hülse für den Glaskörper und einen Steckzapfen aufweist, an dessen Außenseiten einander gegenüberliegende Kontaktdrähte auf Grundflächen von Längsnuten aufliegen. Zur Halterung und Kontaktierung des Beleuchtungskörpers sind am Handstück Federarme vorgesehen, in die Längsnuten der Steckzapfen einfassen und dadurch eine durch ihre Elastizität vorgegebene elastisch nachgiebige Halterung des Beleuchtungskörpers bilden. Dadurch wird die Kontaktierung auch bei Schwingungen während des Betriebs eines dentalen Handstücks gewährleistet.

Andere bekannte dentale Beleuchtungsvorrichtungen mit einer LED sind in ihren geometrischen Abmessungen wegen der Größe des Leuchtmittels relativ unhandlich. Für den zahnärztlichen Einsatz sind jedoch Handstücke mit geringeren Abmessungen wünschenswert.

DE 10 2008033556 A1 offenbart eine Lichtquelle zur Nutzung in einem Gerät, beispielsweise in einem zahnmedizinischen Gerät, mit einem in einem Gehäuse angeordneten Halbleiterelement, wobei das Halbleiterelement eine Lichtabgabefläche aufweist. Weiterhin weist die Lichtquelle einen Sockel auf, der sich von einer der Lichtabgabefläche gegenüberliegenden Seite des Halbleiterelements aus erstreckt und der dafür vorgesehen ist, an einer in dem Gerät angeordneten Fassung eingesetzt zu werden, wobei der Sockel Kontaktelemente und Leitungen zur Stromversorgung des Halbleiterelements aufweist. Die Lichtquelle ist besonders robust und langlebig.

EP 1260196 A2 offenbart eine Beleuchtungseinrichtung für zahnärztliche Zwecke die eine Anzahl von Halbleiter-Lichtquellen hat, die auf einem Substrat befestigt sind. Die Lichtquellen sind von einer reflektierenden Oberfläche umgeben, die das sichtbare Licht reflektiert.

Aus betriebswirtschaftlichen und technischen Gründen wäre es für eine neuartige Beleuchtungsvorrichtung vorteilhaft, falls diese zu herkömmlichen Fassungen der dentalen Handstücke kompatibel wäre und ohne größeren technischen Aufwand ausgetauscht werden könnte.

Darüber hinaus taucht bei herkömmlichen Beleuchtungsvorrichtungen das Problem der Wärmeableitung auf, das oft durch eine technisch aufwändige Weise wie den Einsatz eines separaten Kühlkörpers und/oder einer Luftkühlung gelöst wird.

Eine solche neuartige dentale Beleuchtungsvorrichtung sollte darüber hinaus sicher aufgebaut sein und eine lange Lebensdauer aufweisen.

Der Erfindung liegt deshalb die Aufgabe zu Grunde eine Beleuchtungsvorrichtung bereitzustellen, die in ihren geometrischen Abmessungen möglichst gering ist, sicher aufgebaut ist, zu den herkömmlichen Handstücken kompatibel ist und eine lange Lebensdauer aufweist.

Diese Aufgabe wird durch die Beleuchtungsvorrichtung gemäß Anspruch 1 sowie Anspruch 2 gelöst.

### Darstellung der Erfindung

Erfindungsgemäß weist eine Beleuchtungsvorrichtung für ein medizinisches oder ein zahnmedizinisches Handstück eine Leuchtdiode auf, die auf einem Träger angebracht ist, wobei der Träger elektrische Leiterbahnen und einen Sockel aufweist. Die elektrischen Leiterbahnen verbinden den Sockel mit der Leuchtdiode, wobei zumindest ein Teil des Trägers, der in direkten Kontakt mit der Leuchtdiode steht, aus einem elektrisch isolierenden Material besteht, wobei dieses Material eine hohe Wärmeleitfähigkeit von mindestens 3 W/m °K , vorzugsweise von mindestens 10 W/m °K, aufweist und damit als ein Wärmeleiter dienen kann.

Die erfindungsgemäße Beleuchtungsvorrichtung ist für ein medizinisches oder ein zahnmedizinisches Handstück vorgesehen, wobei ein zahnmedizinisches Handstück ein Teil einer Behandlungseinheit darstellt, die mit einem Betriebsteil meist über eine Steckkupplung lösbar verbunden wird.

Die Leuchtdiode kann eine farbige Leuchtdiode oder eine weiße photolumineszierenden Leuchtdiode sein, die als ein LED-Chip ohne Gehäuse mit einer hohen Leistung ausgeführt sein kann.

Insbesondere leistungsstarke LED-Chips erfordern eine bessere Kühlung als die herkömmlichen Halogenlampen, so dass die Kühleigenschaft der erfinderischen Beleuchtungsvorrichtung von Vorteil ist.

Die Verwendung einer Leuchtdiode anstatt der herkömmlichen Halogenlampe hat den Vorteil, dass die Leuchtdiode gegen Schwingungen im Funktionsbetrieb des Handstücks weniger empfindlich ist, effizienter im Verbrauch ist, eine längere Lebensdauer aufweist.

Ein Vorteil der erfinderischen Beleuchtungsvorrichtung ist, dass die Leuchtdiode auf einem Träger angebracht ist, der wegen seiner hohen Wärmeleitfähigkeit als ein Wärmeleiter oder sogar selbst als ein Kühlkörper dient. Eine gute Wärmeableitung sorgt für eine lange Lebensdauer und eine gute Farbkonstanz der Leuchtdiode, denn eine Überhitzung der Leuchtdiode kann zu einer Zerstörung oder einer Beeinträchtigung des abgestrahlten Spektrums führen.

Der Träger aus dem elektrisch isolierenden Material mit der hohen Wärmeleitfähigkeit kann die an der Leuchtdiode entstehende Wärmeenergie zu den Außenflächen des Trägers ableiten, die dann die Wärmeenergie an ein umgebende Kühlmedium, nämlich Luft, abgeben kann oder über die elektrischen Kontakte an die Fassung weiterleitet.

Die Beleuchtungsvorrichtung kann auch ein Bauteil aufweisen, das den Träger umhüllt und durch Wasser oder eine sonstige Kühlflüssigkeit gekühlt wird, wobei Wasser oder diese Kühlflüssigkeit durch ein dafür vorgesehenen Anschluss in das zahnärztlichen Handstück eingespeist wird und gegebenenfalls zum Kopfteil des zahnärztlichen Handstücks weitergeleitet wird und dort als ein Spraymedium zur Kühlung der Präparationsstelle im Mundraum eines Patienten eingesetzt werden kann.

Falls die Beleuchtungsvorrichtung in einer Fassung aus Kunststoff montiert ist oder eine zusätzliche seitliche Verkleidung aus Kunststoff, wie eine Isolierhülse, aufweist, wird die Wärmeenergie, da der Kunststoff eine geringe Wärmeleitfähigkeit aufweist, zum hinteren Ende des Sockels der Beleuchtungsvorrichtung abgeführt und wird dort an die umgebende Luft abgeben.

Ein weiterer Vorteil ist, wenn die erfindungsgemäße Beleuchtungsvorrichtung einen Sockel aufweist, der eine elektrische Steckverbindung ermöglicht und dadurch das Auswechseln der Beleuchtungsvorrichtung erleichtert.

Ein weiterer Vorteil ist, dass die erfinderische Beleuchtungsvorrichtung eine kompakte Baugruppe darstellt, die durch den Träger nach außen elektrisch isoliert ist und gegen mechanische Einwirkungen von außen geschützt ist, wodurch die Lebensdauer der Beleuchtungsvorrichtung, insbesondere unter der Einwirkung von Feuchtigkeit und Öl in einem zahnärztlichen Handstück, erheblich verlängert wird.

Darüber hinaus bietet der Träger ausreichend Platz um verschiedene elektronische Schaltungen in die Baugruppe zu integrieren, die damit ebenfalls gegen äußere Einwirkungen geschützt sind.

Der Träger kann beispielsweise in großer Stückzahl aus einem Strangpressprofil oder mittels eines Pressverfahrens günstiger hergestellt werden.

Die beschriebene integrierte Bauweise erlaubt es, die erfinderische Beleuchtungsvorrichtung mit sehr kleinen Ausmaßen herzustellen.

Vorteilhafterweise kann der Sockel am hinteren Ende des Trägers und die Leuchtdiode am vorderen Ende des Trägers angeordnet sein. Dadurch strahlt die Beleuchtungsvorrichtung Licht am entgegengesetzten Ende der elektrischen Kontakte ab, so wie es bei herkömmlichen Halogenlampen üblich ist.

Vorteilhafterweise kann die Beleuchtungsvorrichtung in den äußeren geometrischen Abmessungen einer herkömmlichen Halogenlampe mit einer bestimmten Sockelart, wie einem Stiftsockel, entsprechen und zu der dazugehörigen Fassung kompatibel sein.

Dadurch kann eine herkömmliche Halogenlampe auf einfache Art und Weise gegen die erfindungsgemäße Beleuchtungsvorrichtung ausgetauscht werden, ohne technische Veränderungen am zahnärztlichen Handstück vornehmen zu müssen.

Vorteilhafterweise kann der Durchmesser des Sockels höchstens 4 mm, der Außendurchmesser der Beleuchtungsvorrichtung höchstens 6 mm und die Länge der Beleuchtungsvorrichtung höchstens 15 mm betragen.

Diese kompakten äußeren geometrischen Abmessungen entsprechen den Abmessungen herkömmlicher Halogenlampen für zahnärztliche Handstücke.

Vorteilhafterweise kann das elektrisch isolierende Material des Trägers eine thermische Stabilität bis zu einer Temperatur von mindestens 600 °C aufweisen.

Dadurch wird gewährleistet, dass der Träger sich auch bei hohen Temperaturen, die beim Betrieb der Hochleistungsleuchtdiode entstehen, nicht verformt oder spröde wird.

Vorteilhafterweise können die Leiterbahnen mit Kontaktflächen verbunden sein, die an den seitlichen Außenflächen des Sockels angeordnet sind.

Durch die seitlichen Kontaktflächen wird eine sichere elektrische Kontaktierung des Sockels mit einer passenden Fassung innerhalb des zahnärztlichen Handstücks ermöglicht. Die entsprechenden Kontakte in der Fassung können beispielsweise als Federkontakte ausgeführt sein, die auch bei Erschütterungen während des Betriebs eine sichere Kontaktierung gewährleisten.

Vorteilhafterweise können die Leiterbahnen innerhalb einer dafür vorgesehenen durchgehenden Bohrung angebracht sein, die parallel zur Längsachse des Trägers angeordnet ist.

Dadurch wird eine sichere elektrische Kontaktierung gewährleistet. Die Leiterbahnen werden im Inneren des Trägers vor äußeren mechanischen Einwirkungen und Berührungen geschützt und dadurch wird die Lebensdauer der Beleuchtungsvorrichtung verlängert.

Vorteilhafterweise können die Leiterbahnen mittels der so genannten Metallisierung als eine streifenförmige Beschichtung auf die seitlichen Oberflächen des Sockels aufgebracht sein.

Die Metallisierung ist ein in der automatischen maschinellen Fertigung übliches Beschichtungsverfahren und gewährleistet eine sichere Kontaktierung bei einer hohen Beständigkeit der Leiterbahnen an der Oberfläche des Trägers.

Die Leiterbahnen können auch mittels der so genannten Dickschicht-Hybridtechnik aufgebracht werden. Als Trägermaterial dienen meist Platten aus Al₂O-Keramiksubstrat, auch Keramikfolien für LTCC Technologie (Low Temperature Cofired Ceramics). Leiterbahnen werden drucktechnisch im Siebdruckverfahren aufgebracht und dürfen sich - mittels Isolierschichten - auch kreuzen. Ebenso werden elektrische Widerstände hergestellt, welche gegebenenfalls nachträglich durch das Lasertrimmen einem Laser-Feinabgleich unterzogen werden. Der derart bedruckte Träger wird gebrannt, wobei die aufgebrachten Fritten (Pulvermischungen für Widerstände, Isolationen oder Leiterbahnen) zu sehr widerstandsfähigen und zuverlässigen Schichten verschmelzen.

Diese Dickschichtschaltung kann dann mit weiteren, nicht drucktechnisch herstellbaren Bauteilen (aktive Bauteile, Kondensatoren) weiter bestückt werden. Aufgrund der guten Wärmeleitfähigkeit des Substrates bietet sich der Einsatz von LED-Chips ohne Gehäuse, also nackter Silicium-Plättchen an. Die gebräuchlichsten Verbindungstechniken für die auf der Dickschicht-Schaltung angebrachten Bauteile sind das Reflow-Löten und das Bonden.

Die Leiterbahnen können auch zunächst mittels der beschriebenen Dickschichttechnik aufgebracht werden und anschließend galvanisiert werden.

Es gibt grundsätzlich zwei verschiedene Kontaktierungsmöglichkeiten:
Bei der ersten Möglichkeit sind die Kontaktstellen an den entgegengesetzten Oberflächen der Leuchtdiode angeordnet, wobei die zum Träger zugewandte Kontaktstelle auf einer Leiterbahn befestigt wird und mit dieser elektrisch verbunden wird (z.B. mittels Leitkleber, wobei die elektrische Kontaktierung der Leuchtdiode über den Leitkleber erfolgt). Die Kontaktierung der zweiten von dem Träger abgewandten Kontaktstelle erfolgt vorzugsweise mittels des Bondens, wobei die äußere Kontaktstelle über einen Draht mit einer zweiten Leiterbahn auf dem Träger verbunden wird.

Bei der zweiten Möglichkeit sind die beiden Kontaktstellen der Leuchtdiode auf einer Oberfläche der Leuchtdiode angeordnet.

Falls die beiden Kontaktstellen auf der zum Träger hin zugewandten Oberfläche angeordnet sind, kann das Kontaktieren über eine Leitkleberverbindung auf zwei separate Leiterbahnen auf dem Träger erfolgen.

Falls die beiden Kontaktstellen auf der vom Träger abgewandten Oberfläche der Leuchtdiode angeordnet sind, erfolgt das Kontaktieren mittels des Bondens über zwei Drähte, die die Kontaktstellen mit den beiden Leiterbahnen auf dem Träger verbinden.

Vorteilhafterweise können die Leiterbahnen mittels Bonden oder mittels eines Leitklebers an den Kontaktstellen an der äußeren Oberfläche der Leuchtdiode, die dem Träger bzw. dem Sockel abgewandt ist, angebracht sein, wobei die vordere Fläche des Trägers, auf der die Leuchtdiode angeordnet ist, mit einer transparenten Isolierung bedeckt ist.

Die dem Träger abgewandte Oberfläche der Leuchtdiode ist leichter zugänglich und das Anbringen der elektrischen Verbindungen an den Kontaktstellen der Leuchtdiode wird dadurch erleichtert.

Eine transparente Isolierung hat den Vorteil, dass die Kontaktstellen und die Leiterbahnen gegen die Einwirkung von Feuchtigkeit und Öl geschützt sind. Dabei weist die Isolierung eine hohe optische Durchlässigkeit auf, um das von der Leuchtdiode erzeugte Licht möglichst wenig abzuschwächen.

Vorteilhafterweise kann die transparente Isolierung der Kontaktstellen in ihrer Form als eine integrierte Linse mit gewünschten optischen Eigenschaften ausgebildet sein und/oder eine separate optische Linse im Strahlengang der Leuchtdiode angeordnet sein, die die von der Leuchtdiode ausgesandten Lichtstrahlen zur optischen Einkopplung auf eine Einkopplungsfläche des Lichtleiters fokussiert, falls die Lichtstrahlen der Beleuchtungsvorrichtung mittels eines Lichtleiters innerhalb des Handstücks zu einer Lichtaustrittsöffnung in einem Kopfteil des Handstücks geleitet werden, um das Behandlungsgebiet im Mundraum eines Patienten zu beleuchten.

Bei den meisten herkömmlichen zahnärztlichen Handstücken befindet sich das Leuchtmittel, wie eine Halogenlampe, im hinteren Teil des Handstücks, wobei das Licht mittels eines Lichtleiters, wie einer Glasfaser, zu einem Kopfteil des Handstücks geleitet wird und dort durch eine Lichtaustrittsöffnung austritt. Zur Verbesserung der optischen Einkopplung wird die transparente Isolierung als eine Linse geformt, die die Lichtstrahlen auf eine Einkopplungsfläche des Lichtleiters, wie eines einzelnen Glasfasers, eines Faserstabes oder eines Bündels von Glasfasern, fokussiert.

Die Einkopplungsfläche kann beispielsweise eine abgeschrägte oder eine zur Achse des Lichtleiters senkrecht verlaufende Schnittfläche sein. Durch die größere Fläche wird mehr Licht in den Lichtleiter eingekoppelt und die Lichtintensität des aus der Lichtaustrittsöffnung austretenden Lichts zur Beleuchtung des Behandlungsgebiets im Mundraum eines Patienten erhöht.

Ein herkömmliches Handstück ist oft aus einem vorderen Teil mit einem elektrischen Motor und einer Halterung für einen Werkzeug sowie aus einem Anschlussteil mit den Anschlüssen für Luft, Wasser und Strom aufgebaut. Die herkömmliche Halogenlampe ist dabei an der vorderen Fläche des Anschlussteils und die Einkopplungsfläche des Lichtleiters entsprechend am vorderen Teil des Handstücks angeordnet. Das vordere Teil des Handstücks wird mittels einer Steckverbindung beziehungsweise einer Drehverbindung mit dem Anschlussteil des Handstücks verbunden. Eine gute optische Ankopplung der Beleuchtungsvorrichtung an den Lichtleiter ist dabei besonders wichtig.

Vorteilhafterweise kann die transparente Isolierung der Kontaktstellen in ihrer Form als eine integrierte Linse mit gewünschten optischen Eigenschaften ausgebildet sein und/oder eine separate optische Linse kann im Strahlengang der Leuchtdiode angeordnet sein, die die von der Leuchtdiode ausgesandten Lichtstrahlen in Form eines Lichtkegels streut beziehungsweise ausrichtet. Diese Ausführungsform der Beleuchtungsvorrichtung ist für Handstücke vorgesehen, bei denen die Beleuchtungsvorrichtung im vorderen Teil in der Nähe des Kopfteils des Handstücks angebracht ist und das Behandlungsgebiet im Mundraum eines Patienten unmittelbar beleuchtet wird.

Die erfinderische Beleuchtungsvorrichtung kann auch im Kopfteil eines Handstücks zur direkten Beleuchtung des Behandlungsgebiets eingesetzt werden. Dabei wird die transparente Isolierung als eine Streulinse geformt, die die parallelen Lichtstrahlen in einem Lichtkegel streut, um das Behandlungsgebiet homogen auszuleuchten.

Vorteilhafterweise kann die transparente Isolierung der Kontaktstellen eine Vergussmasse enthalten, die zur Lichtleitung und zur Abdichtung der Kontaktstellen gegen Feuchtigkeit und Öl sowie zum Schutz gegen mechanische Einwirkungen dient.

Dadurch werden die Leuchtdiode und die Leiterbahnen gegen Feuchtigkeit und Öl sowie gegen mechanische Einwirkungen geschützt, um beispielsweise Beschädigungen der Kontaktierung oder Kurzschlüsse zu vermeiden.

Vorteilhafterweise kann die transparente Isolierung der Kontaktstellen aus einer äußeren Schicht aus einem elastischen transparenten Material und einer inneren Schicht aus einem harten transparenten Material aufgebaut sein, um die Leiterbahnen und die Kontaktstellen an der Leuchtdiode vor mechanischen Einwirkungen und gegen Feuchtigkeit und Öl zu schützen.

Die innere Schicht aus einem harten transparenten Material gewährt die nötige mechanische Stabilität zum Schutz gegen äußere mechanische Einwirkungen, wobei die äußere Schicht aus einem elastischen transparenten Material die elektronischen Elemente abdichtet und damit vor dem Eindringen von Feuchtigkeit und Öl schützt, wobei beide Schichten zur elektrischen Isolierung dienen.

Die elastische Schicht dient auch zur Anlage an den Lichtleiter, um einen Luftspalt, der durch mögliche Fertigungstoleranzen der Beleuchtungsvorrichtung entstehen könnte und zu einer unerwünschten Lichtbrechung führen würde, zu verhindern, falls die Lichtstrahlen der Leuchtdiode in einer alternativen Ausführungform direkt in den anliegenden Lichtleiter eingekoppelt werden.

Vorteilhafterweise kann die äußere Schicht aus einem elastischen Silikon und die innere Schicht aus einem harten Silikon aufgebaut sein.

Silikon ist als Material für die transparente Isolierung geeignet, da es einfach zu verarbeiten ist, sterilisationsbeständig ist und die Anforderungen an die mechanischen und optischen Eigenschaften erfüllt.

Die transparente Isolierung kann auch aus Glas, aus einem besonderen Kunstharz bzw. aus einem Kunststoff (z.B. PSU, PMP, PES, PFA) als Vergussmasse aufgebaut sein.

Vor allem die Sterilisationsbeständigkeit des verwenden Materials sollte gegeben sein, da die erfinderische Beleuchtungsvorrichtung regelmäßig sterilisiert werden muss.

Vorteilhafterweise kann das elektrisch isolierende und wärmeleitfähige Material des Trägers eine besondere Keramik mit hoher Wärmeleitfähigkeit, ein passiviertes Metall oder ein mit einer Kunststoffschicht beschichtetes Metall sein.

Durch die Auswahl dieser Materialien wird eine hohe Wärmeleitfähigkeit bei einer dauerhaften elektrischen Isolierung gewährleistet.

Die besondere Keramik ist beispielsweise ein Material mit einem Anteil an Aluminiumoxid Al₂O₃ von mehr als 96%. Dieses Material weist eine besonders hohe Wärmeleitfähigkeit von mehr als 24 W/m °K auf. Dieser elektrisch isolierende Werkstoff zeichnet sich insbesondere durch hohe Festigkeit, Oberflächengüte, Thermozyklierbarkeit, Thermoschockbeständigkeit und Biegefestigkeit aus.

Vorteilhafterweise kann die vordere Fläche des Trägers, auf der die Leuchtdiode angebracht ist, als ein Reflektor ausgebildet sein.

Dadurch wird die Lichtintensität des zur Beleuchtung verwendeten Lichts im Arbeitsbereich erhöht. Der Reflektor stellt damit einen integrierten Bestandteil des Trägers dar und damit ist kein separater Reflektor notwendig.

Vorteilhafterweise kann die vordere Fläche des Trägers als ein Reflektor geformt sein und schräge, konzentrische, um die Leuchtdiode verlaufende Reflektorflächen aufweisen. Diese Reflektorflächen können mit einer Farbschicht, wie mit einem Chromlack oder einem weißen Lack, oder mit einer Goldschicht beschichtet sein, die einen hohen Reflektionsgrad aufweist.

Dadurch kann die vordere Fläche des Trägers so geformt sein, wie es die optischen Eigenschaften des Reflektors, wie beispielsweise die Brennweite, erfordern. Die erforderliche Brennweite des Reflektors hängt vom Abstand der integrierten Beleuchtungsvorrichtung und der Einkopplungsfläche des Lichtleiters innerhalb des Handstücks ab, so dass für unterschiedliche Handstücken jeweils eine passende Beleuchtungsvorrichtung mit der erforderlichen Brennweite bereitgestellt werden kann. Die Brennweite ergibt sich aus der Anordnung der Reflektionsflächen und dem Brechungsindex des Materials, das für die transparente Isolierung verwendet wird.

Die Beschichtung der Reflektionsflächen mit einer Goldschicht hat den Vorteil, dass dadurch das Anbringen der Kontakte für die Leuchtdiode erleichtert wird.

Die Beschichtung der Reflektorflächen mit einer Farbschicht ermöglicht die Bereitstellung eines Reflektors auf eine einfache, sichere und günstige Weise.

Vorteilhafterweise können die Reflektorflächen zur optischen Einkopplung die von der Leuchtdiode ausgesandten Lichtstrahlen auf eine Einkopplungsfläche des Lichtleiters fokussieren, falls die Beleuchtungsvorrichtung für Handstücken vorgesehen ist, bei denen die Lichtstrahlen der Beleuchtungsvorrichtung mittels eines Lichtleiters innerhalb des Handstücks zu einer Lichtaustrittsöffnung in einem Kopfteil des Handstücks geleitet werden, um das Behandlungsgebiet im Mundraum eines Patienten zu beleuchten. Dadurch wird der Reflektor in seinen optischen Eigenschaften so gestaltet, das die Einkopplung des Lichts möglichst verbessert und dadurch die Intensität des aus der Lichtaustrittsöffnung austretenden Lichts erhöht wird.

Vorteilhafterweise können die Reflektorflächen so angeordnet sein, dass die Lichtstrahlen mittels der Reflektorflächen auf die gewünschte Weise in Form eines Lichtkegels gestreut werden, falls die Beleuchtungsvorrichtung für Handstücke vorgesehen ist, bei denen die Beleuchtungsvorrichtung in einem Kopfteil des Handstücks angebracht ist und das Behandlungsgebiet im Mundraum eines Patienten unmittelbar beleuchtet.

Dadurch wird der Reflektor so gestaltet, dass die von der Leuchtdiode abgestrahlten Lichtstrahlen in Form eines Lichtkegels reflektiert werden, um das Behandlungsgebiet homogen auszuleuchten.

Vorteilhafterweise können im Träger mehrere elektronische Bauteile integriert sein, die zur Funktionsfähigkeit der Beleuchtungsvorrichtung notwendig sind.

Dadurch wird eine kompakte Baugruppe bereitgestellt, die einen sicheren Einsatz ermöglicht.

Vorteilhafterweise kann im Träger eine Schaltung zur Strombegrenzung integriert sein.

Dadurch wird die Beleuchtungsvorrichtung vor einem unerwarteten Stromanstieg geschützt und dadurch die Lebensdauer verbessert.

Vorteilhafterweise kann im Träger eine Schaltung integriert sein, die die Leuchtdiode mit einem gepulsten Spannungssignal im Bereich von kHz oder MHz betreibt.

Dadurch kann die Leuchtdiode im gepulsten Modus betrieben werden, wobei bei gleicher Leuchtstärke eine geringere Wärmemenge erzeugt wird und dadurch Leuchtdioden mit einer hohen Leistung ohne aktive Kühlung verwendet werden können.

Vorteilhafterweise können auf dem Träger neben der ersten Leuchtdiode weitere Leuchtdioden mit abweichenden Wellenlängen integriert sein.

Dadurch wird eine Beleuchtungsvorrichtung bereitgestellt, die Spektren unterschiedlicher Wellenlängen abhängig von der Ansteuerung abstrahlen kann. Dies ist insbesondere bei Beleuchtungsvorrichtungen für zahnärztliche Handstücke vorteilhaft, da es von Vorteil ist, wenn man mit dem gleichen Handstück in einem Modus das Behandlungsgebiet mit tageslichtähnlichem Licht während der Behandlung zum Einsatz von Zahnersatzteilen oder Füllungen beleuchten kann und in einem anderen Modus das Behandlungsgebiet mit ultraviolettem Licht zur Diagnose von Karies beleuchten kann. Eine Beleuchtung mit ultraviolettem Licht ist beispielsweise zum Aushärten bestimmter photosensitiver dentaler Füllmaterialien notwendig.

Es können auch mehrere Leuchtdioden mit gleicher Wellenlänge nebeneinander in einer Reihe oder bogenförmig auf dem Träger angeordnet sein. Der Lichtleiter weist dann die Form eines Lichtleiterbandes mit einer ovalen Einkopplungsfläche auf, die in ihren an Abmessungen der Reihe der Leuchtdioden entspricht. Dadurch kann eine größere Lichtmenge in den Kopfteil zahnmedizinischen Handstücks zu Beleuchtung eingespeist werden.

Vorteilhafterweise kann im Träger eine Steuerungsvorrichtung zur Steuerung der Leuchtdioden integriert sein, die als eine anwendungsspezifische integrierte Schaltung (ASIC) aufgebaut ist.

Dadurch können die verschiedenen Leuchtdioden in gewünschter Weise angesteuert werden.

Vorteilhafterweise kann die anwendungsspezifische integrierte Schaltung so verschaltet sein, dass sie die verschiedenen Leuchtdioden abhängig von der Spannungshöhe, der Frequenz oder der Modulation der Versorgungsspannung ansteuert.

Dadurch kann die Beleuchtungsvorrichtung auf eine einfache Weise ohne dass ein zusätzliches Steuerungssignal notwendig ist angesteuert werden. In einer alternativen Ausführungsform kann jedoch die integrierte Schaltung auch durch von der Versorgungsspannung abgetrennte Steuerungssignale angesteuert werden.

Vorteilhafterweise kann als Modulation der Versorgungsspannung die Pulsweitenmodulation (PWM) verwendet werden. Dabei wird eine technische Größe, wie der elektrische Strom, zwischen zwei Werten moduliert. Dabei wird das Tastverhältnis bei konstanter Frequenz moduliert, wobei das Tastverhältnis das Verhältnis der Impulsdauer zur Periodendauer darstellt.

Die Pulsweitenmodulation ist eine übliche Methode zur Modulation einer Versorgungsspannung und ist zur Ansteuerung der Beleuchtungsvorrichtung besonders gut geeignet, wobei die Fehleranfälligkeit der Übermittlung von Steuerbefehlen besonders gering ist. Auf diese Weise kann man beispielsweise ein bestimmtes Tastverhältnis einer bestimmten Leuchtfarbe zuordnen und mittels einer Veränderung des Tastverhältnisses die Leuchtfarbe verändern.

Vorteilhafterweise kann die Leuchtdiode ein leistungsstarker LED-Chip mit einer Leistung von mehr als 1 W sein, der kein Gehäuse aufweist und die Leiterbahnen direkt am LED-Chip an den Kontaktstellen angeschlossen sein.

Dadurch wird eine kompaktere Bauweise der Beleuchtungsvorrichtung ermöglicht.

Vorteilhafterweise kann die Leuchtdiode eine LED sein, die mit einem photolumineszierenden Material beschichtet bzw. umgeben ist, um ein dem Tageslicht ähnliches Spektrum abzustrahlen. Vorzugsweise strahlt die Leuchtdiode ein Licht im Bereich von 380 bis 500 nm ab. Die Leuchtdiode kann auch mit mehreren photolumineszierenden Materialien beschichtet sein.

Dadurch wird eine Beleuchtungsvorrichtung bereitgestellt, die ein tageslichtähnliches Spektrum abstrahlt und dadurch insbesondere für ästhetische zahnmedizinische Behandlungsmethoden zur Farbabstimmung von Zahnrestaurationen mit Nachbarzähnen vorteilhaft ist.

Vorteilhafterweise kann die Beleuchtungsvorrichtung eine Isolationshülse aufweisen, die konzentrisch seitlich um den Träger angeordnet ist.

Die Isolationshülse isoliert die auf dem Träger aufgebrachten Leiterbahnen, die die Leuchtdiode am vorderen Ende der Beleuchtungsvorrichtung mit dem Sockel am hinteren Ende der Beleuchtungsvorrichtung verbinden, und schützt diese vor mechanischen Einwirkungen von außen.

Die Montage einer solchen Beleuchtungsvorrichtung wird durch den Aufbau aus dem zylinderförmigen Träger und der Isolationshülse vereinfacht, da im ersten Schritt die Leiterbahnen, die Leuchtdiode, Kontaktflächen, Vorwiderstände und weitere elektronische Elemente auf dem elektrisch isolierenden Träger aufgebracht werden und im zweiten Schritt die Isolationshülse auf über Träger gesteckt wird, um die elektronischen Bauteile elektrisch zu isolieren und vor äußeren mechanischen Einflüssen zu schützen. Dadurch müssen im Vergleich zur alternativen Ausführungsform keine speziellen Bohrungen innerhalb des keramischen Trägers zur Durchführung der Leiterbahnen erst aufwändig erzeugt werden.

Die Isolationshülse kann beispielsweise durch Rasten und anschließendes Verkleben mit dem Träger verbunden werden.

Vorteilhafterweise kann die Isolationshülse aus Kunststoff oder einer besonderen Keramik mit hoher Wärmeleitfähigkeit bestehen.

Falls die Isolationshülse, wie der Träger, aus der besonderen Keramik mit hoher Wärmeleitfähigkeit besteht, dient die Isolationshülse zusammen mit dem Träger als ein Wärmeleiter und leitet die Verlustwärme der Leuchtdiode und der übrigen elektronischen Bauteile auf dem Träger zu den Außenflächen der Isolationshülse, die dort an die umgebende Luft abgegeben wird.

Falls die Isolationshülse aus einem Kunststoff besteht, kann die Verlustwärme der Leuchtdiode und der übrigen elektronischen Bauteile auf dem Träger wegen der schlechten Wärmeleitfähigkeit von Kunststoff nicht zu den Außenflächen der Isolationshülse abgeleitet werden, sondern muss erst zum Sockel durch die Gesamtlänge des Trägers geleitet werden und wird erst dort an die umgebende Luft beziehungsweise an die Bauteile, die die Beleuchtungsvorrichtung haltern, abgegeben.

Eine Isolationshülse aus Kunststoff hätte jedoch den Vorteil, dass dadurch die Beleuchtungsvorrichtung günstiger herzustellen wäre und Kunststoff wegen seiner elastischen Eigenschaften resistenter gegen mechanische Stöße als keramische Materialien ist.

Vorteilhafterweise kann die Beleuchtungsvorrichtung mindestens einen Vorwiderstand aufweisen, der in die Leiterbahnen integriert ist und am Träger zur Kühlung der entstehenden Verlustwärme anliegt, wobei am Vorwiderstand eine Differenzspannung zwischen der am Sockel anliegenden Spannung und der Betriebsspannung der Leuchtdiode abfällt.

Die erfinderische Beleuchtungsvorrichtung soll gegen herkömmliche Halogenlampen ausgetauscht werden, die bei höheren Spannungen betrieben werden. Deshalb wird ein Vorwiderstand in die Leiterbahnen integriert, an dem die Differenzspannung abfällt. Falls die herkömmliche Halogenlampe in einem zahnärztlichen Handstück beispielsweise mit einer Betriebsspannung von 3,5 V betrieben wurde, die an der Fassung und somit am Sockel anliegt, und die Leuchtdiode mit 3,1 V betrieben werden soll, dann muss am Vorwiderstand eine Differenzspannung von 0,4 V abfallen. Falls der Strom durch die Leuchtdiode 200 mA betragen soll, ergibt sich ein Vorwiderstandswert von 2 Ohm.

Vorteilhafterweise kann die Betriebsspannung der Leuchtdiode beziehungsweise die Durchlassspannung sich von Leuchtdiode zu Leuchtdiode unterscheiden und der Vorwiderstand bei jeder Beleuchtungsvorrichtung so kalibriert sein kann, dass die gewünschte Differenzspannung am Vorwiderstand abfällt, nämlich die Differenz zwischen der am Sockel anliegenden Spannung und der Durchlassspannung der Leuchtdiode.

Bei der Serienfertigung kann die Durchlassspannung von LED-Chips stark schwanken, beispielsweise zwischen 3 V und 3,6 V. Der Vorwiderstand muss daher entsprechend kalibriert werden, um alle LED-Chips bei gleicher Leuchtstärke zu betreiben.

Nach einer ersten Methode können die einzelnen LED-Chips bezüglich der Durchlassspannung in verschiedene Klassen beispielsweise in 0,1 V Schritten aufgeteilt werden und anschließend zusammen mit passenden Vorwiderständen montiert werden.

Nach einer zweiten Methode können so genannte lasertrimmbare Vorwiderstände auf dem Träger aufgebracht werden und nach dem Vermessen der Durchlassspannung der LED-Chips entsprechend kalibriert werden, indem mit einem Laser ein Teil des lasertrimmbaren Vorwiderstandes weggebrannt wird, der Querschnitt verringert und dadurch der Widerstandswert erhöht wird.

Gemäß der Erfindung weist das Verfahren zur Herstellung der erfindungsgemäßen Beleuchtungsvorrichtung die folgenden Verfahrensschritte auf:
Die Leuchtdiode wird auf einer vorderen Fläche des Trägers angebracht. Die elektrischen Leiterbahnen werden am vorderen Ende des Trägers mit Kontaktstellen auf der Leuchtdiode elektrisch verbunden und am hinteren Ende des Trägers werden die Leiterbahnen mit Kontaktflächen elektrisch verbunden, die an den Außenflächen des Sockels angebracht sind. Zumindest ein Teil des Trägers, der im direkten Kontakt zur Leuchtdiode steht, wird aus einem elektrisch isolierenden Material gefertigt, das zugleich eine hohe Wärmeleitfähigkeit aufweist und damit als ein Wärmeleiter dient.

Ein Vorteil des erfinderischen Verfahrens ist, dass die erfinderische Beleuchtungsvorrichtung einfach, sicher und kostensparend hergestellt werden kann. Das Verwenden eines Kühlkörpers verbessert die Wärmeableitung und sorgt für eine lange Lebensdauer und eine gute Farbkonstanz der Leuchtdiode.

Vorteilhafterweise kann das Material zur Herstellung des Trägers eine besondere Keramik mit hoher Wärmeleitfähigkeit, ein passiviertes Metall oder ein mit einer Kunststoffschicht beschichtetes Metall sein.

Diese Materialien weisen eine hohe Wärmeleitfähigkeit bei einer dauerhaften elektrischen Isolierung auf.

Vorteilhafterweise können die elektrischen Leiterbahnen mittels Metallisierung am Träger angebracht werden.

Die Metallisierung ist ein übliches Beschichtungsverfahren, das eine hohe Beständigkeit der Leiterbahnen gewährleistet.

Die Leiterbahnen können auch mittels der oben beschriebenen Dickschicht- Hybridtechnik mit anschließender Metallisierung aufgetragen werden.

Vorteilhafterweise können die Leiterbahnen innerhalb einer dafür vorgesehenen durchgehenden Bohrung angebracht werden, die parallel zur Längsachse des Trägers angeordnet ist.

Dadurch werden die Leiterbahnen zusätzlich vor äußeren mechanischen Einwirkungen geschützt.

Vorteilhafterweise kann die vordere Fläche des Trägers mit einer transparenten Isolierung versiegelt werden, so dass die Leuchtdiode und die Leiterbahnen elektrisch isoliert sind und gegen Feuchtigkeit und Öl abgedichtet sind.

Dadurch werden mögliche Kurzschlüsse durch das Eindringen von Feuchtigkeit und Öl verhindert.

Vorteilhafterweise kann die transparente Isolierung so geformt werden, dass sie eine integrierte Linse mit gewünschten optischen Eigenschaften bildet, um die Lichtstrahlen auf eine Einkopplungsfläche eines Lichtleiters des Handstücks zu fokussierten, falls die Beleuchtungsvorrichtung für Handstücke vorgesehen ist, bei denen die Lichtstrahlen der Beleuchtungsvorrichtung mittels eines Lichtleiters innerhalb des Handstücks zu einer Lichtaustrittsöffnung in einem Kopfteil des Handstücks geleitet werden, um das Behandlungsgebiet im Mundraum eines Patienten zu beleuchten.

Bei der Herstellung wird die transparente Isolierung als eine Sammellinse mit einer bestimmten Brennweite geformt, die die Lichtstrahlen auf die Einkopplungsfläche fokussiert, um die optische Einkopplung zu verbessern.

Vorteilhafterweise kann die transparente Isolierung so geformt werden, dass sie eine integrierte Linse mit gewünschten optischen Eigenschaften bildet, die die von der Leuchtdiode ausgesandten Lichtstrahlen in Form eines Lichtkegels streut beziehungsweise ausrichtet, falls die Beleuchtungsvorrichtung für Handstücke vorgesehen ist, bei denen die Beleuchtungsvorrichtung im vorderen Teil in der Nähe des Kopfteils des Handstücks angebracht ist und das Behandlungsgebiet im Mundraum eines Patienten unmittelbar beleuchtet wird.

Dadurch wird die Isolierung als eine Streulinse so geformt, dass das Behandlungsgebiet mit einem Lichtkegel großflächig homogen ausgeleuchtet werden kann.

Vorteilhafterweise kann die transparente Isolierung aus einer ersten inneren Schicht aus einem harten Silikon und anschließend aus einer zweiten äußeren Schicht aus einem elastischen Silikon unter Verwendung des Spritzgussverfahrens bzw. durch Gießen gefertigt werden.

Das Spritzgussverfahren bzw. das Gießen sind besonders geeignet, um die beiden Schichten aus Silikon kostengünstig und zeitsparend zu fertigen.

Vorteilhafterweise kann die Beleuchtungsvorrichtung so gefertigt werden, dass sie in ihren äußeren geometrischen Abmessungen einer herkömmlichen Halogenlampe mit einer bestimmten Sockelart entspricht und zu dem entsprechenden Fassungen, die Gegenstücke der Sockel bilden, kompatibel ist.

Dadurch kann eine Halogenlampe in herkömmlichen zahnärztlichen Handstücken gegen die erfinderische Beleuchtungsvorrichtung ohne größeren technischen Aufwand ausgetauscht werden.

Vorteilhafterweise kann die vordere Fläche des Trägers als ein Reflektor geformt werden, der schräge, konzentrische, um die Leuchtdiode verlaufende Reflektorflächen aufweist, wobei diese Reflektorflächen anschließend mit einer Farbschicht, wie mit einem Chromlack oder einem weißen Lack, beschichtet werden, die einen hohen Reflektionsgrad aufweist.

Dadurch kann auf eine einfache und kostengünstige Weise ein Reflektor mit den erforderlichen optischen Eigenschaften hergestellt werden.

### Kurzbeschreibung der Zeichnungen

Ausführungsbeispiele der Erfindung sind in der Zeichnung dargestellt. Es zeigt die
- Fig. 1: eine Skizze eine Ausführungsform der erfinderischen Beleuchtungsvorrichtung,
- Fig. 2: eine Skizze einer weiteren Ausführungsform der erfinderischen Beleuchtungsvorrichtung mit einer Linse und einem Reflektor,
- Fig. 3: eine andere Ansicht der Ausführungsform aus Fig. 1,
- Fig. 4: eine Skizze eines zahnärztlichen Handstücks mit einer Beleuchtungsvorrichtung und einem Lichtleiter,
- Fig. 5: eine Skizze einer weiteren Ausführungsform der Beleuchtungsvorrichtung mit einer Isolationshülse,
- Fig. 6: eine Explosionsdarstellung der Ausführungsform aus Fig. 5,
- Fig. 7: eine technische Zeichnung in einer Ansicht von vorne, von der Seite und von oben von einer herkömmlichen Halogenlampe,
- Fig. 8: eine Ausführungsform der erfinderischen Beleuchtungsvorrichtung mit einer elastischen Schicht,
- Fig. 9: eine alternative Ausführungsform der Beleuchtungsvorrichtung, die in der Nähe des Kopfteils des zahnärztlichen Handstücks angeordnet ist.

### Ausführungsbeispiele

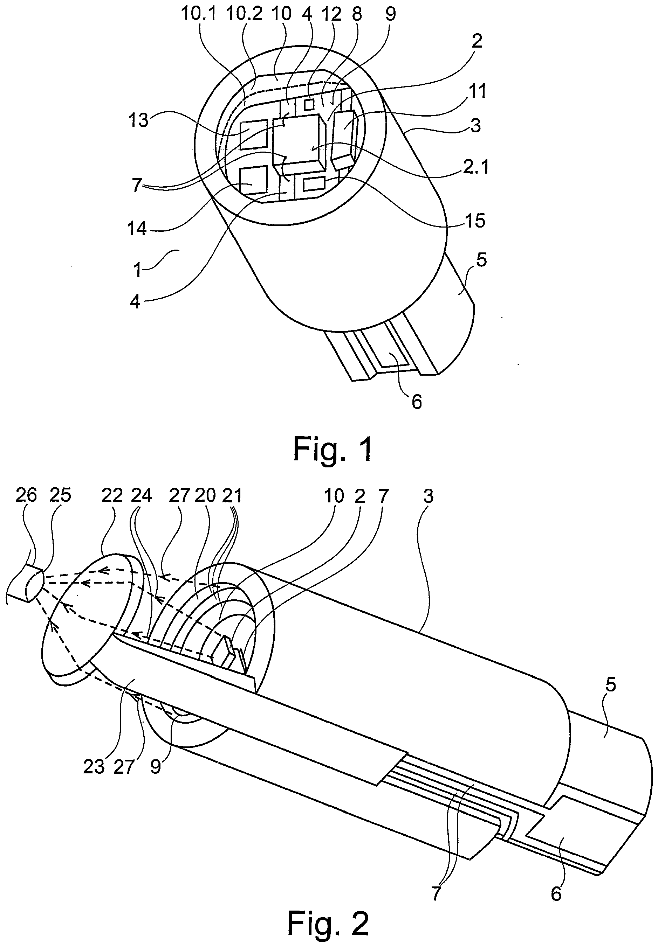

Die Fig. 1 zeigt eine Skizze einer Ausführungsform der erfinderischen Beleuchtungsvorrichtung 1 für ein medizinisches oder ein zahnmedizinisches Handstück, die eine Leuchtdiode 2 und einen Träger 3 aufweist. Der Träger 3 umfasst Leiterbahnen 4 und einen Sockel 5, wobei die Leiterbahnen 4 Kontaktflächen 6, die an den Seitenflächen des Sockels 5 angebracht sind, elektrisch mit Kontaktstellen 7 verbinden, die auf der äußeren Oberfläche 2.1 der Leuchtdiode 2 angeordnet sind. Zumindest ein vordere Teil 8 des Trägers 3, der in direkten Kontakt mit der Leuchtdiode 2 steht, besteht aus einem elektrisch isolierenden Material mit einer hohen Wärmeleitfähigkeit, nämlich aus einer besonderen Keramik mit einer hohen Wärmeleitfähigkeit, und dient damit als ein Kühlkörper. Dabei entspricht die Beleuchtungsvorrichtung 1 in ihren äußeren geometrischen Abmessungen einer herkömmlichen Halogenlampe eines zahnärztlichen Handstücks und der Sockel 5 ist kompatibel zu einer entsprechenden Fassung in herkömmlichen zahnärztlichen Handstücken. Die Leiterbahnen 4 und die Kontaktflächen 6 des Sockels 5 werden unter Verwendung des Metallisierungsverfahrens, beispielsweise des oben genannten Dickschicht-Hybridtechnik, als eine streifenförmige Beschichtung auf dem Träger 3 und den Außenflächen des Sockels 5 angebracht. Die vordere Fläche 9 des Trägers 3 ist mit einer transparenten Isolierung 10 bedeckt, die aus einer ersten inneren Schicht 10.1 aus harten Silikon als Vergussmasse und einer zweiten äußeren Schicht 10.2 aus elastischen Silikon besteht, wobei die erste Schicht 10.1 die Leiterbahnen 7, die Leuchtdiode 2 und weitere elektronische Bauteile vor äußeren mechanischen Einwirkungen schützt und die zweite Schicht 10.2 gegen Feuchtigkeit und Öl abdichtet und damit Kurzschlüsse verhindert werden. Im Träger 3 sind auf der vorderen Fläche 9 weitere elektronische Bauteile integriert, nämlich eine Schaltung zur Strombegrenzung 11, eine Schaltung für einen gepulsten Betrieb 12 der Leuchtdiode 2 im Bereich von Picosekunden. Neben der ersten Leuchtdiode 2, die ein weißer LED-Chip ist, der mit einem photolumineszierenden Material beschichtet ist und ein dem Tageslicht ähnliches Spektrum abstrahlt, ist auf der vorderen Fläche 9 des Trägers 3 eine zweite Leuchtdiode 13 zur Abstrahlung eines ultravioletten Spektrums und eine dritte Leuchtdiode 14 zur Abstrahlung eines infraroten Spektrums integriert. Darüber hinaus ist im Träger 3 eine Steuerungsvorrichtung 14 als eine anwendungsspezifische integrierte Schaltung (ASIC) zur Steuerung der Leuchtdioden 2, 12 und 13 integriert. Die Steuervorrichtung 15 ist so geschaltet, dass die Leuchtdioden abhängig von der Modulation der Versorgungsspannung separat angesteuert werden. Als Modulation der Versorgungsspannung wird die Pulsweitenmodulation (PWM) verwendet. Abhängig vom angesteuerten Modus wird dann mittels der Steuerungsvorrichtung 15 entweder die erste Leuchtdiode 2, die zweite Leuchtdiode 13 oder die dritte Leuchtdiode 14 betrieben.

Die Fig. 2 zeigt eine Skizze einer weiteren Ausführungsform der erfinderischen Beleuchtungsvorrichtung, die einen Reflektor 20 mit schrägen, konzentrischen, um die Leuchtdiode verlaufenden Reflektorflächen 21 und eine externe Linse 22 zur Bündelung der von der Leuchtdiode 2 abgestrahlten Lichtstrahlen aufweist. Die Reflektorflächen 21 sind mit einer Farbschicht beschichtet, die einen hohen Reflektionsgrad aufweist. Als Beschichtung wird beispielsweise ein Chromlack oder ein weißer Lack verwendet. Die externe Linse 22 ist mittels eines Halters 23 mit dem Träger 3 verbunden, wobei die externe Linse 22 gewünschte optische Eigenschaften aufweist und in einem vorgesehenen Abstand zur Leuchtdiode 2 angeordnet ist, um die von der Leuchtdiode 2 abgestrahlten Lichtstrahlen 24 zur optischen Einkopplung auf eine Einkopplungsfläche 25 des Lichtleiters 26 innerhalb des Handstücks zu fokussieren. Diese Ausführungsform ist für Handstücke geeignet, bei denen die Lichtstrahlen 24 der Beleuchtungsvorrichtung 1 mittels des Lichtleiters 26 innerhalb des nicht dargestellten Handstücks zu einer nicht dargestellten Lichtaustrittsöffnung in einem Kopfteil des Handstücks geleitet werden, um das Behandlungsgebiet im Mundraum eines Patienten zu beleuchten. Die Leiterbahnen 7 verbinden den LED-Chip 2 mit den Kontaktflächen 6 an den Seitenflächen des Sockels 5. Die erfinderische Beleuchtungsvorrichtung mit einer separaten externen Linse kann auch für Handstücke ausgelegt sein, bei denen die Beleuchtungsvorrichtung in einem Kopfteil des Handstücks angebracht ist und das Behandlungsgebiet im Mundraum eines Patienten unmittelbar beleuchtet. Dabei ist die externe Linse als eine Streulinse gestaltet, um die von der Leuchtdiode abgestrahlten Lichtstrahlen in Form eines Lichtkegels zu streuen und das Behandlungsgebiet gleichmäßig auszuleuchten. Die vordere Fläche 9 des Trägers ist mit einer transparenten Isolierung 10 bedeckt, die aus Silikon besteht. Die nach außen gerichtete Oberfläche der transparenten Isolierung 10 ist so geformt, das sie eine integrierte Linse mit gewünschten optischen Eigenschaften bildet, die in Kombination mit der externen Linse 22 die von der Leuchtdiode 2 abgestrahlten Lichtstrahlen 24 auf die Einkopplungsfläche 25 des Lichtleiters 26 fokussiert. Die transparente Isolierung 10 kann auch als eine Streulinse gestaltet sein, falls die Beleuchtungsvorrichtung für Handstücke vorgesehen ist, bei denen die Beleuchtungsvorrichtung Behandlungsgebiet unmittelbar in Form eines Lichtkegels beleuchtet.

Der Träger 3 ist aus einer besonderen Keramik mit einer hohen Wärmeleitfähigkeit gefertigt, der als ein Kühlkörper 8 der Leuchtdiode 2 dient.

Die konzentrisch um die Leuchtdiode verlaufenden Reflektorflächen 21 des Reflektors 20 sind so angeordnet, dass die von den Reflektorflächen 21 reflektierte Lichtstrahlen 27 gebündelt werden und im Zusammenspiel mit der externen Linse 22 auf die Einkopplungsfläche 25 des Lichtleiters 26 fokussiert werden, um die optische Einkopplung zu verbessern.

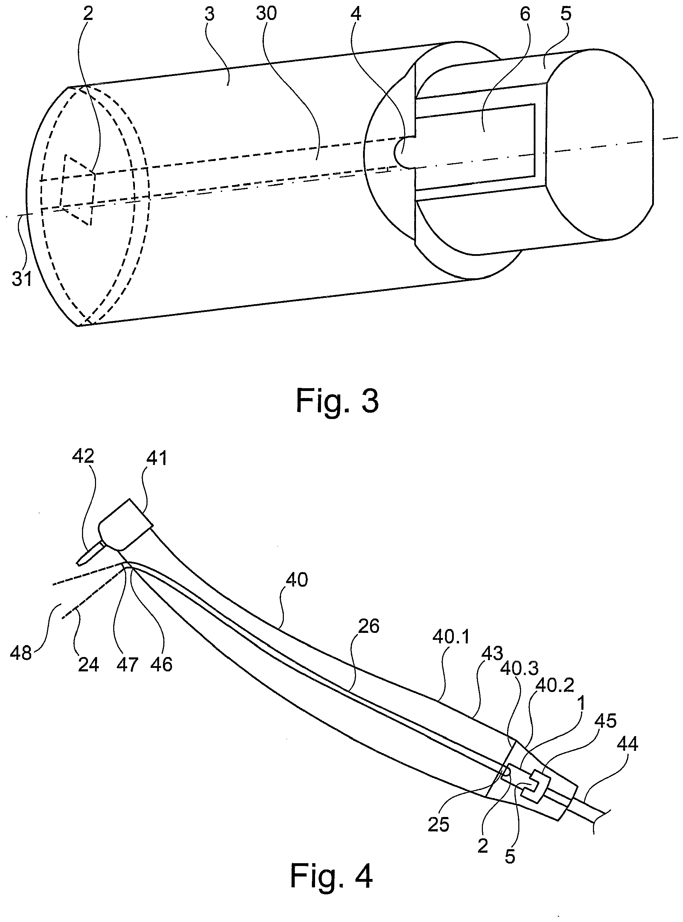

Die Fig. 3 zeigt eine seitliche Ansicht der Ausführungsform der Beleuchtungsvorrichtung aus Fig. 1, die aus dem Träger 3 und dem Sockel 5 aufgebaut ist, wobei die Leiterbahnen 4 die rechteckigen Kontaktflächen 6, die an den Seitenflächen des Sockels 5 angeordnet sind, mit der Leuchtdiode 2 an der vorderen Fläche 9 des Trägers 3 elektrisch verbinden. Die Leiterbahnen 4 sind innerhalb einer durchgehenden Bohrung 30 unter Verwendung eines Metallisierungsverfahrens angebracht, die parallel zur Längsachse 31 des Trägers 3 angeordnet ist.

Die Fig. 4 zeigt eine Skizze eines zahnärztlichen Handstücks 40 mit der Ausführungsform der erfinderischen Beleuchtungsvorrichtung aus Fig. 1 und Fig. 3. Das zahnärztliche Handstück 40 weist einen Kopfteil 41 mit einem Bearbeitungswerkzeug 42, wie einem Bohrer, einem Fräser, einem Schleifwerkzeug oder einen Polierwerkzeug, am vorderen Ende des Handstücks 40 und ein Griffteil 43 am hinteren Ende des Handstücks 40 auf. Das zahnärztliche Handstück 40 ist über ein elektrisches Kabel 44 mit einem nicht dargestellten Basisteil, wie einem Arztelement oder einem Arzthelferelement, verbunden. Das Basisteil versorgt das Handstück 40 mit der Antriebspannung und steuert das Handstück durch Steuerungssignale. Im hinteren Ende des Griffteils 43 ist eine Fassung 45 angeordnet, die das Gegenstück zum Sockel 5 der Beleuchtungsvorrichtung 1 bildet. Die Beleuchtungsvorrichtung 1 entspricht in ihren äußeren geometrischen Abmessungen einer herkömmlichen Halogenlampe, wobei insbesondere der Sockel 5 in seiner äußeren Form der Sockelart dieser herkömmlichen Halogenlampen entspricht. Der Sockel 5 der Beleuchtungsvorrichtung 1 ist daher zu der herkömmlichen Fassung 45 kompatibel, die ursprünglich zur elektrischen Kontaktierung mit einer Halogenlampe vorgesehen war. Die Kompatibilität der Beleuchtungsvorrichtung 1 zur herkömmlichen Fassung hat den Vorteil, dass die Halogenlampe ohne größeren technischen Aufwand gegen die erfinderische Beleuchtungsvorrichtung 1 ausgetauscht werden kann, ohne Veränderungen an dem Handstück 40 vornehmen zu müssen. Im Inneren des Handstücks 40 ist ein Lichtleiter 26, dessen Ende bereits in Fig. 2 dargestellt ist, angeordnet. Der Lichtleiter 26 ist ein Bündel aus Glasfasern. Die von der

Leuchtdiode 2 innerhalb der Beleuchtungsvorrichtung 1 abgestrahlten Lichtstrahlen 24 werden, wie bereits in Fig.1 und Fig. 3 oder wie in Fig. 2 erläutert, zur besseren optischen Einkopplung auf eine Einkopplungsfläche 25 des Lichtleiters 26 fokussiert und durch den Lichtleiter 26 zu einer Lichtaustrittsöffnung 46 im Kopfteil 41 des Handstücks 40 geleitet. An der Lichtaustrittsöffnung 46 ist eine Streulinse 47 angebracht, die die austretenden Lichtstrahlen 24 in Form eines Lichtkegels 48 streut, um das nicht dargestellte Behandlungsgebiet im Mundraum eines Patienten gleichmäßig zu beleuchten. Die Beleuchtungsvorrichtung 1 kann auch für Handstücke vorgesehen sein, bei denen die Beleuchtungsvorrichtung direkt im Kopfteil des Handstücks angeordnet ist, um das Behandlungsgebiet mit abgestrahlten Lichtstrahlen in Form eines Lichtkegels unmittelbar zu beleuchten. Das zahnärztliche Handstück 40 ist aus einem vorderen Teil 40.1 mit einem nicht dargestellten elektrischen Motor und einer Halterung im Kopfteil 41 für das Bearbeitungswerkzeug 42 sowie aus einem Anschlussteil 40.2 mit den Anschlüssen für Luft, Wasser und Strom aufgebaut. Die Beleuchtungsvorrichtung 1 ist dabei in das Anschlussteil integriert, wobei die Leuchtdiode 2 an der vorderen Fläche des Anschlussteils angeordnet ist 40.2, wobei die Einkopplungsfläche 25 des Lichtleiters 26 entsprechend am vorderen Teil 40.1 des Handstücks angeordnet ist. Das vordere Teil 40.1 des Handstücks wird mittels einer Steckverbindung beziehungsweise einer Drehverbindung mit dem Anschlussteil 40.2 des Handstücks verbunden. Eine gute optische Ankopplung der Leuchtdiode 2 an die Einkopplungsfläche 25 des Lichtleiters 26 ist dabei besonders wichtig. Der vordere Teil 40.1 ist vom Anschlussteil 40.2 schematisch durch eine Trennlinie 40.3 abgetrennt.

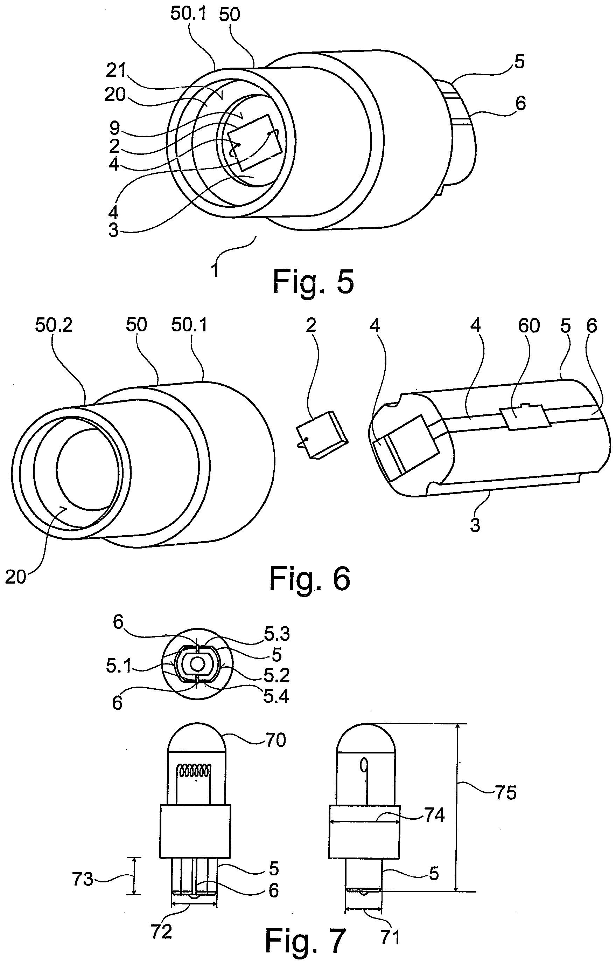

Die Fig. 5 zeigt eine weitere Ausführungsform der erfindungsgemäßen Beleuchtungsvorrichtung 1, wobei auf dem Träger 3 eine Isolationshülse 50 aufgesteckt ist. Die Isolationshülse 50 besteht aus einem vorderen Teil 50.1 mit geringerem Durchmesser und einem hinteren Teil 50.2 mit größerem Durchmesser. Auf der vorderen Fläche 9 des Trägers 3 ist die Leuchtdiode 2 angeordnet und elektrisch mit den Leiterbahnen 4 verbunden. Die Leiterbahnen 4 verbinden die Kontaktflächen 6 und Sockel 5 mit der Leuchtdiode 2. An der Stirnfläche des vorderen Teils 50.1 der Isolationshülse 50 ist ein Reflektor 20 durch schräge, konzentrische um die Leuchtdiode 2 verlaufende Reflektorflächen 21 gebildet. Die Isolationshülse 50 kann aus Kunststoff oder einer besonderen Keramik mit hoher Leitfähigkeit, wie der Träger 3, aufgebaut sein. Falls die Isolationshülse 50 aus der besonderen Keramik aufgebaut ist, wird die Verlustwärme der Leuchtdiode 2 direkt über die Außenflächen der Isolationshülse 50 abgeführt. Falls die Isolationshülse 50 aus Kunststoff aufgebaut ist, wird der Träger 3 durch die Isolationshülse 50 nach außen hin thermisch isoliert und die Verlustwärme der Leuchtdiode 2 wird zum Sockel 5 geleitet und kann dort an die Umgebungsluft und die Fassung abgegeben werden.

Die Fig. 6 zeigt eine Explosionsdarstellung der Ausführungsform aus Fig. 5. Am Träger 3 sind Leiterbahnen 4, Kontaktflächen 6 und Sockel 5 sowie ein Vorwiderstand 60 angeordnet. Der Vorwiderstand 60 ist dabei in die Leiterbahn 4 integriert und liegt zur Kühlung der am Vorwiderstand 60 entstehenden Verlustwärme am Träger 3 an. Der Widerstandswert des Vorwiderstandes 60 ist so gewählt, dass am Vorwiderstand eine Differenzspannung abfällt, die der Differenz zwischen der an dem Kontaktflächen 6 am Sockel 5 anliegenden Spannung und der Durchlassspannung des LED-Chips 2 entspricht. Der Vorwiderstand 60 ist ein lasertrimmbarer Widerstand und wird bei der Fertigung nach dem Vermessen der Durchlassspannung des LED-Chips 2 kalibriert, indem mit einem Laser ein Teil des lasertrimmbaren Widerstands weggebrannt wird und somit der Widerstandswert erhöht wird. Durch den Aufbau der Beleuchtungsvorrichtung 1 aus dem Träger 3 und der Isolationshülse 50 wird die Montage vereinfacht. In einem ersten Schritt der Montage werden die Leiterbahnen 4, Kontaktflächen 6, der LED-Chip 2 und der Vorwiderstand 60 auf dem keramischen Träger 3 angebracht. In einem zweiten Schritt der Montage wird die Isolationshülse 50 mit dem Träger 3 zusammengestellt durch Rastern verbunden und anschließend verklebt. Dadurch werden die elektrischen Leiterbahnen 4, Leuchtdiode 2 und der Vorwiderstand 60 nach außen hin elektrisch isoliert und vor äußeren mechanischen Einwirkungen geschützt.

Die Fig. 7 zeigt eine technische Zeichnung einer herkömmlichen Halogenlampe 70 in einer Ansicht von vorne, von der Seite und von oben. Die erfinderische Beleuchtungsvorrichtung 1 entspricht in den äußeren geometrischen Abmessungen in etwa herkömmlichen Halogenlampe 70. Insbesondere der Sockel 5 ist identisch, um eine Kompatibilität zu ermöglichen. Der Sockel 5 weist in seinem Querprofil zwei gegenüberliegende runde Flächen 5.1, 5.2 auf, die Kreisabschnitte bilden, und weitere zwei gegenüberliegende flache Flächen 5.3, 5.4 auf. Auf den flachen Flächen 5.3, 5.4 des Sockels 5 sind Kontaktflächen 6 angeordnet. Der erste Abstand 71 zwischen den beiden flachen Flächen 5.3, 5.4 beträgt 2,6 mm und der zweite Abstand 72, der den Durchmesser der Kreisabschnitte 5.1 und 5.2 bildet, beträgt 3 mm. Die Höhe 73 des Sockels 5 beträgt 2,5 mm. Der Außendurchmesser der Beleuchtungsvorrichtung 1 darf den Außendurchmesser 74 der Halogenlampe von 4,6 mm und die Gesamtlänge der Beleuchtungsvorrichtung darf die Gesamtlänge 75 der Halogenlampe von 11,6 mm nicht überschreiten.

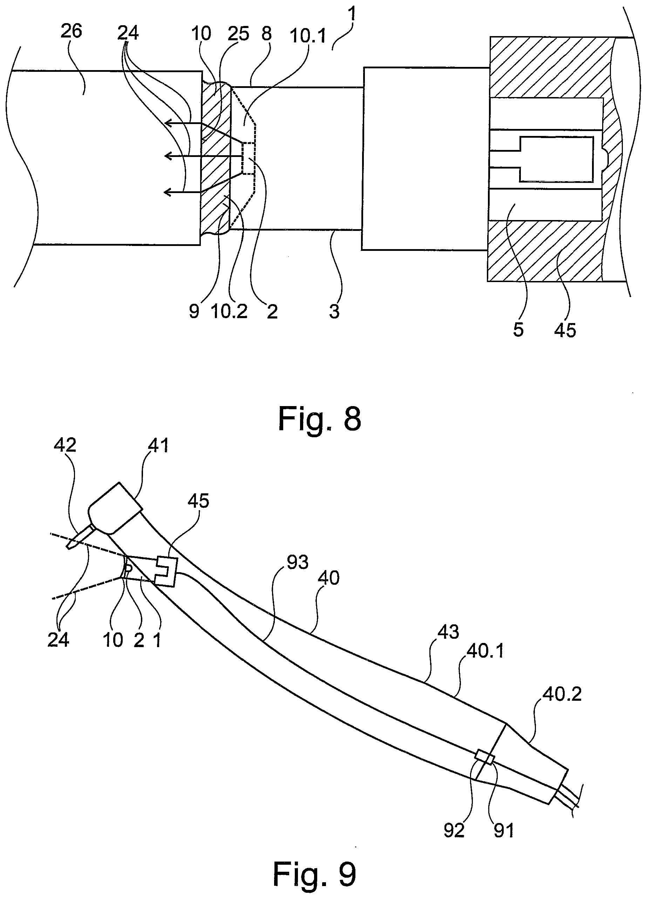

Die Fig. 8 stellt eine Ausführungsform der erfindungsgemäßen Beleuchtungsvorrichtung 1 dar, die an der vorderen Fläche 9 des Trägers 3 eine transparente Isolierung 10 aufweist. Die transparente Isolierung 10 besteht aus einer inneren Schicht 10.1 aus hartem Silikon, die den gesamten Innenraum im vorderen Teil 8 des Trägers 3 um die Leuchtdiode 2 ausfüllt, und aus einer äußeren Schicht 10.2 aus elastischem Silikon, die zur Anlage an die Einkopplungsfläche 25 des Lichtleiters 26 dient. Die elastische Schicht 10.2 ist an den Lichtleiter 26 angelegt und elastisch verformt, so dass zwischen der Leuchtdiode 2 und der Einkopplungsfläche 25 des Lichtleiters 26 kein Luftspalt vorhanden ist, der zu unerwünschten Durchbrechungen führen könnte. Dadurch wird die Einkopplung der von der Leuchtdiode 2 abgestrahlten Lichtstrahlen 24 in den Lichtleiter 26 verbessert. Die bei der Herstellung der Beleuchtungsvorrichtung entstehenden Fertigungstoleranzen werden durch die elastische Schicht 10.2 ebenfalls ausgeglichen. Der Sockel 5 der Beleuchtungsvorrichtung 1 ist in die Fassung 45 eines herkömmlichen Handstücks 40 aus Fig. 4 eingesetzt, die in einer Längsschnitt schematisch dargestellt ist.

Die Fig. 9 zeigt eine Skizze eines zahnärztlichen Handstücks 40, das eine alternative Ausführungsform zur Ausführungsform aus Fig. 4 darstellt. Das zahnärztliche Handstück 40 weist einen Kopfteil 41 mit einem Bearbeitungswerkzeug 42 am vorderen Ende des Handstücks 40 und ein Griffteil 43 am hinteren Ende des Handstücks 40 auf. Das zahnärztliche Handstück 40 ist aus einem vorderen Teil 40.1, das das Kopfteil 41 umfasst, und einem Anschlussteil 40.2 mit den Anschlüssen für Luft, Wasser und Strom aufgebaut. Das vordere Teil 40.1 des Handstücks wird mittels einer Steckverbindung beziehungsweise einer Drehverbindung mit dem Anschlussteil 40.2 verbunden, wobei eine Kontaktstelle 91 am Anschlussteil 40.1 mit einer entsprechenden Kontaktstelle 92 am vorderen Teil 40.2 des Handstücks 40 elektrisch verbunden wird. Von der Kontaktstelle 92 am vorderen Teil 40.2 wird die Betriebsspannung mittels einer elektrischen Leitung 93 an den Sockel 45 der erfinderischen Beleuchtungsvorrichtung 1 weitergeleitet. Abweichend zur Ausführungsform aus der Fig. 4 ist die Beleuchtungsvorrichtung 1 im vorderen Teil 40.2 in der Nähe des Kopfteils 41 integriert. Die Beleuchtungsvorrichtung 1 kann auch im Kopfteil 41 integriert sein. Die transparente Isolierung 10, die die Leuchtdiode 2 elektrisch isoliert, ist in der Form einer Streulinse ausgebildet, wobei die von der Leuchtdiode 2 abgestrahlten Lichtstrahlen 24 in der Form eines Lichtkegels gestreut beziehungsweise ausgerichtet werden, um das Behandlungsgebiet im Mundraum eines Patienten auszuleuchten.

### Bezugszeichenliste

- 1: Beleuchtungsvorrichtung
- 2: Leuchtdiode
- 2.1: äußere Oberfläche
- 3: Träger
- 4: Leiterbahnen
- 5: Sockel
- 6: Kontaktfläche
- 7: Kontaktstellen
- 8: der vordere Teil des Trägers, Kühlkörper
- 9: die vordere Fläche
- 10: die transparente Isolierung
- 10.1: innere Schicht aus hartem Silikon
- 10.2: äußere Schicht aus elastischem Silikon
- 11: Schaltung zur Strombegrenzung
- 12: Schaltung für einen gepulsten Betrieb
- 13: zweite Leuchtdiode
- 14: dritte Leuchtdiode
- 15: Steuerungsvorrichtung
- 20: Reflektor
- 21: Reflektorflächen
- 22: externe Linse
- 23: Halter
- 24: abgestrahlte Lichtstrahlen
- 25: Einkopplungsfläche
- 26: Lichtleiter
- 27: reflektierte Lichtstrahlen
- 30: durchgehende Bohrung
- 31: Längsachse des Trägers
- 40: das zahnärztliche Handstück
- 41: Kopfteil
- 42: Bearbeitungswerkzeug
- 43: Griffteil
- 44: das elektrische Kabel
- 45: Fassung
- 46: Lichtaustrittsöffnung
- 47: Streulinse
- 48: Lichtkegel
- 50: Isolationshülse
- 50.1: vorderer Teil
- 50.2: hinterer Teil
- 60: Vorwiderstand
- 70: herkömmliche Halogenlampe
- 5.1: runde Fläche
- 5.2: runde Fläche
- 5.3: flache Fläche
- 5.4: flache Fläche
- 71: erster Abstand
- 72: zweiter Abstand
- 73: Höhe des Sockels
- 74: Außendurchmesser
- 75: Gesamtlänge
- 91: Kontaktstelle
- 92: Kontaktstelle
- 93: elektrische Leitung

## Patentansprüche

1. Beleuchtungsvorrichtung (1) für ein medizinisches oder ein zahnmedizinisches Handstück (40), die eine Leuchtdiode (2) aufweist, **wobei** die Leuchtdiode (2) auf einem Träger (3) angebracht ist, wobei der Träger (3) elektrische Leiterbahnen (4) und einen Sockel (5) aufweist, wobei die Leiterbahnen (4) den Sockel(5) mit der Leuchtdiode (2) elektrisch verbinden, die Leiterbahnen (4) an der Leuchtdiode (2), die dem Sockel (5) abgewandt ist, mittels eines Leitklebers oder mittels Bondens angebracht sind, wobei zumindest ein Teil (8) des Trägers (3), der in direkten Kontakt mit der Leuchtdiode (2) steht, aus einem elektrisch isolierenden Material besteht, wobei dieses Material eine hohe Wärmeleitfähigkeit von mindestens 3 W/(m °K) aufweist, wobei die Leiterbahnen (4) als eine streifenförmige Beschichtung am Träger (3) aufgebracht sind, wobei eine vordere Fläche (9) des Trägers (3), auf der die Leuchtdiode (2) angeordnet ist, mit einer transparenten Isolierung (10) bedeckt ist, **dadurch gekennzeichnet, dass** die transparente Isolierung (10) in ihrer Form als eine integrierte Linse mit gewünschten optischen Eigenschaften ausgebildet ist die die von der Leuchtdiode (2) abgestrahlten Lichtstrahlen (24) zur optischen Einkopplung auf eine Einkopplungsfläche (25) des Lichtleiters (26) fokussiert, wobei die transparente Isolierung (10) aus einer äußeren Schicht (10.2) aus einem elastischen transparenten Material und einer inneren Schicht (10.1) aus einem harten transparenten Material aufgebaut ist, um die Leiterbahnen (4) und die Leuchtdiode (2) vor mechanischen Einwirkungen und gegen Feuchtigkeit und Öl zu schützen.

2. Beleuchtungsvorrichtung (1) für ein medizinisches oder ein zahnmedizinisches Handstück (40), die eine Leuchtdiode (2) aufweist, **wobei** die Leuchtdiode (2) auf einem Träger (3) angebracht ist, wobei der Träger (3) elektrische Leiterbahnen (4) und einen Sockel (5) aufweist, wobei die Leiterbahnen (4) den Sockel(5) mit der Leuchtdiode (2) elektrisch verbinden, die Leiterbahnen (4) an der Leuchtdiode (2), die dem Sockel (5) abgewandt ist, mittels eines Leitklebers oder mittels Bondens angebracht sind, wobei zumindest ein Teil (8) des Trägers (3), der in direkten Kontakt mit der Leuchtdiode (2) steht, aus einem elektrisch isolierenden Material besteht, wobei dieses Material eine hohe Wärmeleitfähigkeit von mindestens 3 W/(m °K) aufweist, wobei die Leiterbahnen (4) als eine streifenförmige Beschichtung am Träger (3) aufgebracht sind, wobei eine vordere Fläche (9) des Trägers (3), auf der die Leuchtdiode (2) angeordnet ist, mit einer transparenten Isolierung (10) bedeckt ist, **dadurch gekennzeichnet, dass** die transparente Isolierung (10) in ihrer Form als eine integrierte Linse mit gewünschten optischen Eigenschaften ausgebildet ist die die von der Leuchtdiode (2) abgestrahlten Lichtstrahlen (24) in Form eines Lichtkegels streut, falls die Beleuchtungsvorrichtung (1) für Handstücke vorgesehen ist, bei denen die Beleuchtungsvorrichtung (1) im vorderen Teil (40.2) in der Nähe des Kopfteils (41) des Handstücks angebracht ist und das Behandlungsgebiet im Mundraum eines Patienten unmittelbar beleuchtet wird, wobei die transparente Isolierung (10) aus einer äußeren Schicht (10.2) aus einem elastischen transparenten Material und einer inneren Schicht (10.1) aus einem harten transparenten Material aufgebaut ist, um die Leiterbahnen (4) und die Leuchtdiode (2) vor mechanischen Einwirkungen und gegen Feuchtigkeit und Öl zu schützen.

3. Beleuchtungsvorrichtung (1) nach Anspruche 1 oder 2, **dadurch gekennzeichnet, dass** die Leiterbahnen (4) mit Kontaktflächen (6) verbunden sind, die an seitlichen Außenflächen des Sockels (5) angeordnet sind.

4. Beleuchtungsvorrichtung (1) nach einem der Ansprüche 1 bis 3, **dadurch gekennzeichnet, dass** die transparente Isolierung (10) eine Vergussmasse (10.2, 10.3) enthält, die zur Lichtleitung und zur Abdichtung der Leuchtdiode (2) gegen Feuchtigkeit und Öl sowie zum Schutz gegen mechanische Einwirkungen dient.

5. Beleuchtungsvorrichtung (1) nach einem der Ansprüche 1 bis 4, **dadurch gekennzeichnet, dass** das elektrisch isolierende und wärmeleitfähige Material des Trägers (3) eine besondere Keramik mit hoher Wärmeleitfähigkeit, ein passiviertes Metall oder ein mit einer Kunststoffschicht beschichtetes Metall oder eine Leiterplatte ist.

6. Beleuchtungsvorrichtung (1) nach einem der Ansprüche 1 bis 5, **dadurch gekennzeichnet, dass** die vordere Fläche (9) des Trägers (3), auf der die Leuchtdiode (2) angebracht ist, als ein Reflektor (20) ausgebildet ist.

7. Beleuchtungsvorrichtung (1) nach einem der Ansprüche 1 bis 6, **dadurch gekennzeichnet, dass** im Träger (3) mehrere elektronische Bauteile (11, 12, 13, 14, 15) integriert sind, die zur Funktionsfähigkeit der Beleuchtungsvorrichtung (1) notwendig sind.

8. Beleuchtungsvorrichtung (1) nach Anspruch 7, **dadurch gekennzeichnet, dass** im Träger (3) eine Schaltung zur Strombegrenzung (11) integriert ist.

9. Beleuchtungsvorrichtung (1) nach einem der Ansprüche 1 bis 8, **dadurch gekennzeichnet, dass** auf dem Träger (3) neben der ersten Leuchtdiode (2) weitere Leuchtdioden (13, 14) mit abweichenden Wellenlängen integriert sind.

10. Beleuchtungsvorrichtung (1) nach einem der Ansprüche 7 bis 9, **dadurch gekennzeichnet, dass** im Träger (3) eine Steuerungsvorrichtung (15) zur Steuerung der Leuchtdioden (2, 13, 14) integriert ist, die als eine anwendungsspezifische integrierte Schaltung (ASIC) aufgebaut ist.

11. Beleuchtungsvorrichtung (1) nach Anspruch 10, **dadurch gekennzeichnet, dass** die anwendungsspezifische integrierte Schaltung (15) so verschaltet ist, dass sie die verschiedenen Leuchtdioden (2, 13, 14) abhängig von der Spannungshöhe, der Frequenz oder der Modulation der Versorgungsspannung ansteuert.

12. Beleuchtungsvorrichtung (1) nach einem der Ansprüche 7 bis 11, **dadurch gekennzeichnet, dass** als Modulation der Versorgungsspannung die Pulsweitenmodulation (PWM) verwendet wird, bei der eine technische Größe, wie der elektrische Strom, zwischen zwei Werten modelliert wird und damit eine codierte Sequenz erzeugt wird, die zur Ansteuerung der einzelnen Leuchtdioden (2, 13, 14) verwendet wird.

13. Beleuchtungsvorrichtung (1) nach einem der Ansprüche 1 bis 12, **dadurch gekennzeichnet, dass** die Leuchtdiode (2, 13, 14) ein leistungsstarker LED-Chip mit einer Leistung von mehr als 1 W ist, der kein Gehäuse aufweist und die Leiterbahnen (4) an den Kontaktstellen direkt am LED-Chip angeschlossen sind.

14. Beleuchtungsvorrichtung (1) nach einem der Ansprüche 1 bis 13, , **dadurch gekennzeichnet, dass** die Beleuchtungsvorrichtung (1) eine Isolationshülse (50) aufweist, die konzentrisch seitlich um den Träger (3) angeordnet ist.

15. Beleuchtungsvorrichtung (1) nach einem der Ansprüche 1 bis 14, **dadurch gekennzeichnet, dass** die Beleuchtungsvorrichtung (1) mindestens einen Vorwiderstand (60) aufweist, der in die Leiterbahnen (4) integriert ist und am Träger (3) zur Kühlung der entstehenden Verlustwärme anliegt, wobei am Vorwiderstand (60) eine Differenzspannung zwischen der am Sockel anliegenden Spannung und der Betriebsspannung der Leuchtdiode abfällt.

16. Beleuchtungsvorrichtung (1) nach einem der Ansprüche 1 bis 15, **dadurch gekennzeichnet, dass** die Betriebsspannung der Leuchtdiode beziehungsweise die Durchlassspannung sich von Leuchtdiode zu Leuchtdiode unterscheiden kann und der Vorwiderstand (60) bei jeder Beleuchtungsvorrichtung so kalibriert ist, dass die gewünschte Differenzspannung am Vorwiderstand (60) abfällt, nämlich die Differenz zwischen der am Sockel anliegenden Spannung und der Durchlassspannung der Leuchtdiode.

## Claims

1. Lighting device (1) for a medical or dental handpiece (40), which has a light-emitting diode (2), the light-emitting diode (2) **being** mounted on a carrier (3), the carrier (3) having electrical conductive tracks (4) and a base (5), the conductive tracks (4) electrically connecting the base (5) to the light-emitting diode (2), the conductive tracks (4) being mounted on the light-emitting diode (2) facing away from the base (5) by means of a conductive adhesive or by means of bonding, at least a part (8) of the carrier (3), which is in direct contact with the light-emitting diode (2), consisting of an electrically insulating material, this material having a high thermal conductivity of at least 3 W/(m °K), the conductive tracks (4) being applied to the carrier (3) as a coating in strip form, a front surface (9) of the carrier (3), on which the light-emitting diode (2) is arranged, being covered with transparent insulation (10), **characterised in that** the transparent insulation (10) is formed in terms of its shape as an integrated lens with the desired optical properties, which focuses the light beams (24) emitted by the light-emitting diode (2) onto a coupling surface (25) of the light guide (26) for optical coupling, the transparent insulation (10) being composed of an outer layer (10.2) made of an elastic transparent material and an inner layer (10.1) made of a hard transparent material, in order to protect the conductive tracks (4) and the light-emitting diode (2) from mechanical influences and from moisture and oil.

2. Lighting device (1) for a medical or dental handpiece (40), which has a light-emitting diode (2), the light-emitting diode (2) **being** mounted on a carrier (3), the carrier (3) having electrical conductive tracks (4) and a base (5), the conductive tracks (4) electrically connecting the base (5) to the light-emitting diode (2), the conductive tracks (4) being mounted on the light-emitting diode (2) facing away from the base (5) by means of a conductive adhesive or by means of bonding, at least a part (8) of the carrier (3), which is in direct contact with the light-emitting diode (2), consisting of an electrically insulating material, this material having a high thermal conductivity of at least 3 W/(m °K), the conductive tracks (4) being applied to the carrier (3) as a coating in strip form, a front surface (9) of the carrier (3), on which the light-emitting diode (2) is arranged, being covered with transparent insulation (10), **characterised in that** the transparent insulation (10) is formed in terms of its shape as an integrated lens with the desired optical properties, which scatters the light beams (24) emitted by the light-emitting diode (2) in the form of a light cone if the lighting device (1) is intended for handpieces in which the lighting device (1) is mounted in the front part (40.2) in the vicinity of the head part (41) of the handpiece and the treatment area in the oral cavity of a patient is illuminated directly, the transparent insulation (10) consisting of an outer layer (10.2) made of an elastic transparent material and an inner layer (10.1) made of a hard transparent material in order to protect the conductive tracks (4) and the light-emitting diode (2) from mechanical influences and from moisture and oil.

3. Lighting device (1) according to claim 1 or 2, **characterised in that** the conductive tracks (4) are connected to contact faces (6) which are arranged on lateral outer faces of the base (5).

4. Lighting device (1) according to any one of claims 1 to 3, **characterised in that** the transparent insulation (10) contains a potting compound (10.2, 10.3) which is used to guide light and to seal the light-emitting diode (2) against moisture and oil and to protect against mechanical influences.

5. Lighting device (1) according to any one of claims 1 to 4, **characterised in that** the electrically insulating and thermally conductive material of the carrier (3) is a special ceramic with high thermal conductivity, a passivated metal or a metal coated with a plastics layer, or a printed circuit board.

6. Lighting device (1) according to any one of claims 1 to 5, **characterised in that** the front surface (9) of the carrier (3), on which the light-emitting diode (2) is mounted, is formed as a reflector (20).

7. Lighting device (1) according to any one of claims 1 to 6, **characterised in that** a plurality of electronic components (11, 12, 13, 14, 15) which are necessary for the proper functioning of the lighting device (1) are integrated in the carrier (3).

8. Lighting device (1) according to claim 7, **characterised in that** a current-limiting circuit (11) is integrated in the carrier (3).

9. Lighting device (1) according to any one of claims 1 to 8, **characterised in that** in addition to the first light-emitting diode (2), further light-emitting diodes (13, 14) with different wavelengths are integrated on the carrier (3).

10. Lighting device (1) according to any one of claims 7 to 9, **characterised in that** a control device (15) for controlling the light-emitting diodes (2, 13, 14), which is configured as an application-specific integrated circuit (ASIC), is integrated in the carrier (3).

11. Lighting device (1) according to claim 10, **characterised in that** the application-specific integrated circuit (15) is interconnected in such a way that it controls the various light-emitting diodes (2, 13, 14) depending on the voltage level, the frequency or the modulation of the supply voltage.

12. Lighting device (1) according to any one of claims 7 to 11, **characterised in that** pulse width modulation (PWM) is used as modulation for the supply voltage, in which a technical variable, such as the electric current, is modelled between two values and a coded sequence is thereby generated which is used to control the individual light-emitting diodes (2, 13, 14).

13. Lighting device (1) according to any one of claims 1 to 12, **characterised in that** the light-emitting diode (2, 13, 14) is a powerful LED chip with an output of more than 1 W, which has no housing, and the conductive tracks (4) are directly connected to the contact points on the LED chip.

14. Lighting device (1) according to any one of claims 1 to 13, **characterised in that** the lighting device (1) has an insulating sleeve (50) which is arranged concentrically laterally around the carrier (3).

15. Lighting device (1) according to any one of claims 1 to 14, **characterised in that** the lighting device (1) has at least one series resistor (60) which is integrated into the conductive tracks (4) and which rests on the carrier (3) for cooling the resulting heat loss, a differential voltage between the voltage applied at the base and the operating voltage of the light-emitting diode dropping at the series resistor (60).

16. Lighting device (1) according to any one of claims 1 to 15, **characterised in that** the operating voltage of the light-emitting diode, or the forward voltage, can differ from light-emitting diode to light-emitting diode and at each lighting device the series resistor (60) is calibrated in such a way that the desired differential voltage at the series resistor (60) drops, namely the difference between the voltage applied at the base and the forward voltage of the light-emitting diode.

## Revendications

1. Dispositif d'éclairage (1) pour une pièce à main médicale ou dentaire (40), lequel comporte une diode électroluminescente (2), **dans lequel** la diode électroluminescente (2) est montée sur un support (3), dans lequel le support (3) comporte des pistes conductrices (4) et un socle (5), dans lequel les pistes conductrices (4) connectent électriquement le socle (5) à la diode électroluminescente (2), les pistes conductrices (4) , sont appliquées sur la diode électroluminescente (2), laquelle est à l'opposé du socle (5), au moyen d'un adhésif conducteur ou au moyen d'une liaison, dans lequel au moins une partie (8) du support (3), laquelle est en contact direct avec la diode électroluminescente (2), se compose d'une matière électriquement isolante, dans lequel ladite matière présente une conductivité thermique élevée d'au moins 3 W/(m °K), dans lequel les pistes conductrices (4) sont appliquées sous la forme d'un revêtement en forme de bande sur le support (3), dans lequel une surface (9) avant du support (3), sur laquelle la diode électroluminescente (2) est disposée, est recouverte d'une isolation (10) transparente, **caractérisé en ce que** l'isolation (10) transparente est conçue sous la forme d'une lentille intégrée présentant des propriétés optiques souhaitées, laquelle focalise les faisceaux lumineux (24) émis par la diode électroluminescente (2) pour le couplage optique sur une surface de couplage (25) du guide lumineux (26), dans lequel l'isolation (10) transparente est formée d'une couche extérieure (10.2) en une matière transparente élastique et d'une couche intérieure (10.1) en une matière dure et transparente, pour protéger les pistes conductrices (4) et la diode électroluminescente (2) contre des effets mécaniques et contre l'humidité et l'huile.

2. Dispositif d'éclairage (1) pour une pièce à main médicale ou dentaire (40), lequel comporte une diode électroluminescente (2), **dans lequel** la diode électroluminescente (2) est montée sur un support (3), dans lequel le support (3) comporte des pistes conductrices (4) et un socle (5), dans lequel les pistes conductrices (4) connectent électriquement le socle (5) à la diode électroluminescente (2), les pistes conductrices (4) sont appliquées sur la diode électroluminescente (2), laquelle est à l'opposé du socle (5), au moyen d'un adhésif conducteur ou au moyen d'une liaison, dans lequel au moins une partie (8) du support (3), laquelle est en contact direct avec la diode électroluminescente (2), se compose d'une matière électriquement isolante, dans lequel ladite matière présente une conductivité thermique élevée d'au moins 3 W/(m °K), dans lequel les pistes conductrices (4) sont appliquées sous la forme d'un revêtement en forme de bande sur le support (3), dans lequel une surface (9) avant du support (3), sur laquelle la diode électroluminescente (2) est disposée, est recouverte d'une isolation (10) transparente, **caractérisé en ce que** l'isolation (10) transparente est conçue sous la forme d'une lentille intégrée présentant des propriétés optiques souhaitées, laquelle diffuse les faisceaux lumineux (24) émis par la diode électroluminescente (2) sous la forme d'un cône lumineux lorsque le dispositif d'éclairage (1) pour des pièces à main est prévu, dans lesquelles le dispositif d'éclairage (1) est appliqué dans la partie avant (40.2) à proximité de la partie de tête (41) de la pièce à main et la zone de traitement dans la cavité buccale d'un patient est éclairée directement, dans lequel l'isolation (10) transparente est formée d'une couche extérieure (10.2) en une matière transparente élastique et d'une couche intérieure (10.1) en une matière dure et transparente, pour protéger les pistes conductrices (4) et la diode électroluminescente (2) contre des effets mécaniques et contre l'humidité et l'huile.

3. Dispositif d'éclairage (1) selon la revendication 1 ou 2, **caractérisé en ce que** les pistes conductrices (4) sont connectées à des surfaces de contact (6), lesquelles sont disposées sur les surfaces extérieures latérales du socle (5).

4. Dispositif d'éclairage (1) selon l'une des revendications 1 à 3, **caractérisé en ce que** l'isolation (10) transparente contient une matière de remplissage (10.2, 10.3) laquelle sert à conduire la lumière et à étancher la diode électroluminescente (2) contre l'humidité et l'huile, ainsi qu'à assurer une protection contre les effets mécaniques.

5. Dispositif d'éclairage (1) selon l'une des revendications 1 à 4, **caractérisé en ce que** la matière électriquement isolante et thermiquement conductrice du support (3) est une céramique spéciale à haute conductivité thermique, un métal passivé ou un métal revêtu d'une couche de matière plastique ou une carte de circuit imprimé.

6. Dispositif d'éclairage (1) selon l'une des revendications 1 à 5, **caractérisé en ce que** la surface (9) avant du support (3), sur laquelle la diode électroluminescente (2) est appliquée, est conçue sous la forme d'un réflecteur (20).

7. Dispositif d'éclairage (1) selon l'une des revendications 1 à 6, **caractérisé en ce que**, dans le support (3), plusieurs composants (11, 12, 13, 14, 15) électroniques nécessaires au fonctionnement du dispositif d'éclairage (1) sont intégrés.

8. Dispositif d'éclairage (1) selon la revendication 7, **caractérisé en ce que**, dans le support (3), un circuit limiteur de courant (11) est intégré.

9. Dispositif d'éclairage (1) selon l'une des revendications 1 à 8, **caractérisé en ce que**, sur le support (3), en plus de la première diode électroluminescente (2), d'autres diodes électroluminescentes (13, 14) à différentes longueurs d'onde sont intégrées.

10. Dispositif d'éclairage (1) selon l'une des revendications 7 à 9, **caractérisé en ce que**, dans le support (3), un dispositif de commande (15), destiné à la commande des diodes électroluminescentes (2, 13, 14), est intégré et est conçu sous la forme d'un circuit intégré à application spécifique (ASIC).

11. Dispositif d'éclairage (1) selon la revendication 10, **caractérisé en ce que** le circuit (15) intégré à application spécifique est interconnecté de telle sorte qu'il commande les différentes diodes électroluminescentes (2, 13, 14) en fonction du niveau de tension, de la fréquence ou de la modulation de la tension d'alimentation.

12. Dispositif d'éclairage (1) selon l'une des revendications 7 à 11, **caractérisé en ce que** la modulation de largeur d'impulsion (PWM) est utilisée comme modulation de la tension d'alimentation, dans laquelle une grandeur technique, telle que le courant électrique, est modélisée entre deux valeurs, et une séquence codée est ainsi générée, laquelle est utilisée pour commander les diodes électroluminescentes (2, 13, 14) individuelles.

13. Dispositif d'éclairage (1) selon l'une des revendications 1 à 12, **caractérisé en ce que** la diode électroluminescente (2, 13, 14) est une puce LED puissante d'une puissance supérieure à 1 W, laquelle est dépourvue de boîtier et les pistes conductrices (4) sont connectées directement aux points de contact sur la puce LED.

14. Dispositif d'éclairage (1) selon l'une des revendications 1 à 13, **caractérisé en ce que** le dispositif d'éclairage (1) comporte un manchon d'isolation (50) disposé concentriquement latéralement autour du support (3).

15. Dispositif d'éclairage (1) selon l'une des revendications 1 à 14, **caractérisé en ce que** le dispositif d'éclairage (1) comporte au moins une résistance série (60), laquelle est intégrée aux pistes conductrices (4) et repose sur le support (3) pour refroidir la perte de chaleur produite, dans lequel, au niveau de la résistance série (60), une tension différentielle entre la tension présente au socle et la tension de fonctionnement de la diode électroluminescente chute.

16. Dispositif d'éclairage (1) selon l'une des revendications 1 à 15, **caractérisé en ce que** la tension de fonctionnement de la diode électroluminescente ou la tension à l'état passant peut différer d'une diode électroluminescente à l'autre et la résistance série (60) du dispositif d'éclairage respectif est étalonnée de telle sorte que la tension différentielle souhaitée chute au niveau de la résistance série (60), à savoir la différence entre la tension présente au socle et la tension à l'état passant de la diode électroluminescente.
